# EUROPEAN PATENT SPECIFICATION

(11) **EP 4 351 326 B1**
(45) Date of publication and mention of the grant of the patent: **22.10.2025**
(21) Application number: 22737527.6
(22) Date of filing: 08.06.2022
(51) Int. Cl.: A01K 41/06

(54) **IMPROVED HATCHING PROCESS OF EGGS IN HATCHERIES**
VERBESSERTES VERFAHREN ZUM AUSBRÜTEN VON EIER IN BRUTBETRIEBEN
PROCÉDÉ AMELIORÉ D'ÉCLUSION D'OEUFS DANS DES ÈCLOSERIES

(30) Priority: 08.06.2021 BE 202105456
(43) Date of publication of application: 17.04.2024
(73) Proprietor: INNOVATEC HOLDING II B.V., 4147 CR ASPEREN (NL)
(72) Inventor: VAN DE LOO, Philip Karel, 4132 Vianen (NL)
(74) Representative: Bureau M.F.J. Bockstael NV
(86) International application number: PCT/IB2022/055319
(87) International publication number: WO 2022/259163

(56) References cited:
- WO-A1-2011/158140
- WO-A1-2019/097439
- US-A1- 2021 137 080

## Description

The present disclosure relates to an improved hatching process of eggs in hatcheries, more specifically an improved cradle and an automated, integrated hatching process.

This application refers it its entirety to BE1025719B1 and WO2019097439A1 of the same applicant. The hatching process is explained in more detail herein. A cradle is also described herein which forms the basic starting point of the current invention.

However, the cradle according to WO2019097439A1 of the applicants has a stackable cradle wall with attached therein a tiltable inner structure. Said cradle contains a number of positions in which eggs can be placed. Said eggs are then, as is customary, placed in said positions vertically or almost vertically with the widest top pointing upward.

The cradle is stackable via the cradle wall or at least a part thereof. The cradle wall can be provided with a stacking edge for this purpose. This can be executed in various ways. The cradle can also be stackable via the corners of the cradle wall.

The inner structure of the cradle is tiltable in relation to the (fixed stackable) cradle wall via a rotation axis with tilting points in the cradle wall.

Typically, the contour of the cradle has the form of a rectangle with two long and two short sides. Preferably, tilting is via a rotation axis provided between the longest sides (sidewalls). Preferably, the tilting point is located in the middle of the longest side (sidewall). Tilting can also be done via a rotation axis provided between the shortest sides (sidewalls).

The inner structure itself largely looks like a commonly used cradle available on the market. The egg density is also comparable with that of a commonly used cradle.

Transport trolleys are unsuitable for automatic transport. The cradles with a stackable cradle wall and a tiltable inner structure make the application of internal transport trolleys unnecessary.

The inner structure of the cradle is tiltable via a tilting mechanism that simultaneously tilts the individual inner structures of every cradle or the inner structures of a whole stack of cradles. This can be done for example by having a cylinder at the underside push against an inner structure such that all inner structures of the whole stack move at the same time.

This system could also be placed at the upperside, or a combination thereof, such that an inner structure can be pushed down. Consequently all inner structures of a stack are tilted. Tilting is also possible in an alternative way.

WO2019097439A1 describes a tilting mechanism to transmit a tilting movement to a stack of cradles such that the cradles in a certain stack tilt collectively. The cradles are stacked on top of each other to this end. To this end, the inner structure of a cradle is provided with a number of cams on the four ends of the inner structure which transmit the tilting movement to the next cradle of the stack. The cams also serve as a spacer.

Indeed, during the first 14 to 18 days the eggs need to be able to be tilted approximately 45° alternately to the right and left. To this end the inner structure needs to be able to tilt approximately 45° both to the left and right.

Traditional systems do not have a guaranteed tilted end position of +/- 45°, in particular due to wear and tear.

There is always a certain play between the cams, a play which is likely to increase over time due to wear and tear. This play ensures that the angle of the tiltable inner structure becomes smaller as the movement is transmitted to more cradles in the stack.

If, for example, the upper cradle of a stack is mechanically positioned at the right angle, e.g. an angle of 45°, the cradle under the upper tiltable cradle will have a smaller angle, e.g. 44.5°. Because the number of cradles in a stack is relatively high, the deviation in terms of angle can become too great. Studies have shown that the right angle is important because a deviation in the angles results in a lower hatching percentage of the eggs.

The purpose of the present invention is to provide an improved tilting mechanism.

To this end, the invention relates to a cradle as defined in independent claim 1

Preferably, at least one first interface or point of contact is provided in the first direction of the first tilting point, and at least one second interface or point of contact is provided in the second direction of the second tilting point, whereby the first and second interface or point of contact are instrumental for a stable tilted end position of the tilting device after tilting the tilting device in the relevant direction over the relevant tilting point.

If there are no interfaces or points of contact and only two tilting points, extra means are necessary to lock the tilting in a stable tilted end position.

At least one third interface or point of contact is provided between the at least two tilting points, whereby the interface or point of contact is instrumental for the stable untilted position of the tilting device.

The tilting device contains two cooperating tilting elements, a first tilting element for the tiltable inner structure and a second element for the cradle wall, whereby the tilting elements are provided with the aforementioned at least two tilting points and first and second interfaces or points of contact.

In a first embodiment the tilting device has a W-profiling, i.e. two tilting points and at least three interfaces.

In a second embodiment the tilting device is provided with four bolts i.e. two tilting points and two additional points of contact.

The tilting device is provided with at least one first and at least one second tilt supporting element or tilting cam which guide or support the tilting in respectively a first or second direction during the whole tilting movement, whereby the tilt supporting elements or tilting cams are provided in or at the tiltable inner structure at or near the ends of the inner structure.

In an embodiment, the tilting device is provided with two first and two second tilt supporting elements or tilting cams, whereby the four elements are provided at the contour of the inner structure.

Preferably, the tilting cams are located at the level of, or near, the four corners of the inner structure.

Preferably, the inner structure is rectangular.

In a specific embodiment the tilting device is provided with one first and one second tilt supporting element or tilting cam, whereby the two elements are provided in the inner structure itself.

Preferably, the tilting cams are located at a distance from the tilting elements or support cams. This is to ensure the stability of the tilting movement. However, the tilting cams can also be located on the level of the fictitious axis and possibly be an integral part of the support cams.

The cams can be provided in the inner structure itself, e.g. in a free strip between two matrices of eggs.

Such embodiment is less critical in terms of tolerances as the number of components with tolerances is halved, i.e. from four cams to two cams. Furthermore, said embodiment is cost-effective.

In an embodiment the tilt supporting elements each comprise a tilting cam and roller, whereby the tilting cam of a first tilting device is supported by the roller of a second tilting device.

The tilting movement of a first tilting device is transmitted to a second tilting device, when both tilting devices are located above each other.

In a specific embodiment the tilt supporting elements transmit the tilting to a second tilting device, when both tilting devices are located above each other.

Preferably, the stable tilted end position in a first and second direction is 45°.

Preferably, the tilting device is made from plastic, polypropylene, aluminium or any other material that retains its shape. Preferably, the tilting device is made by injection moulding and preferably is integrated in the inner structure and the cradle wall.

The tilting device is dimensioned such that the tilting is started by an external active force and continued up to or just past the tilting angle, after which the tilting is continued under the influence of gravity.

The tilting device is therefore dimensioned for a combined active force and gravity. The initial tilting angle which is started and continued must first overcompensate the accumulated plays of the cradles such that the last cradle can also be tilted to the dead point and subsequently drop to the end position of 45° under the influence of gravity.

In a second aspect the present disclosure relates to a cradle with tiltable inner structure, characterised in that the cradle is provided with the aforementioned tilting device, whereby the cradle comprises corresponding support cams on the cradle wall and the inner structure, and corresponding tilt supporting elements on the inner structure for stably supporting and tilting the inner structure within the cradle wall.

The cradle is stackable and thus forms a stack of cradles. In a specific embodiment of a cradle according to the invention, the inner structure is provided with two support cams at the outer contour on the level of a fictitious tilting axis.

The cradle wall is provided with corresponding supporting cams at the inner contour on the level of a fictitious tilting axis.

The inner structure is further provided with four tilting cams and rollers on the outer contour in the extension of the tilting points.

In a third aspect the present disclosure relates to a stack of cradles whereby the tilting of the stack of cradles is initiated by an external active force which acts on the bottom and/or the top of the stack, whereby the tilting of the cradles is transmitted further to the relevant overlying and/or underlying cradles via the tilt supporting elements.

In an embodiment the external active force on the one hand relates to a force which pushes against a cradle at the bottom or at the top and on the other hand stops the cradles at the top or at the bottom respectively.

More specifically the invention relates to a cradle comprising a stackable cradle wall and a tiltable inner structure with a number of positions to receive eggs, whereby the inner structure is tiltable under an angle, in a first direction and a second direction, around a fictitious tilting axis, characterised in that on the level of the fictitious intersection of the fictitious tilting axis with the cradle wall and the inner structure, a stable tilting device is provided between the tiltable inner structure and the stackable cradle wall of a cradle, said tilting device device comprising two tilting points on the cradle wall and corresponding tilting elements on the inner structure, whereby the inner structure rests/supports stably on the two tilting points in the middle position, and is tiltable in the first direction or in the second direction via the first, respectively the second tilting point.

The tiltable inner structure has a structure such that it can hold on the eggs during tilting and in a tilt position of -45° and +45°. Preferably, the eggs are positioned in a triangular or square pitch.

The present disclosure further relates to a cradle whereby the tilting mechanism comprises corresponding and complementary support elements on the cradle wall and the inner structure for the stable support of the inner structure in the tilted positions left and right.

The present disclosure relates to a cradle whereby an initial force must be given for transmitting a tilting movement whereby the inner structure subsequently, after reaching the tilting angle, drops and is supported further in the desired angle under the influence of gravity.

The present disclosure relates to a cradle whereby the inner structure is symmetrically tiltable. Either via one central tilting point, or via two tilting points symmetrically arranged in relation to the central tip of the tilting movement. This last embodiment also offers locking and support for the stable neutral position of the inner structure.

The present disclosure relates to a cradle whereby the tilting mechanism comprises a first structure which is part of the tiltable inner structure and a second structure which is part of the cradle wall, whereby the first structure is complementary to and cooperates with the second structure, whereby the first structure can rest stably on the second structure, both in the middle position of the inner structure and in the tilted positions left and right, and is stably tiltable over the two tilting points.

The present disclosure relates to a cradle whereby the inner structure is tiltable over 45° left and right.

The present disclosure relates to a cradle whereby a tilting movement is initiated or transmitted by an external force, and the cradle continues tilting on its own starting from a certain angle under the influence of gravity to the correct angle, and this for both a tilting movement to the left and to the right.

The present disclosure relates to a cradle whereby the cradle is provided with a stable bearing structure in which an overlying or underlying cradle comes to "drop" or "fit in" and can rest stably after tilting under the influence of gravity.

The present disclosure relates to a cradle whereby the tiltable inner structure is provided with cams which transmit the tilting movement of the cradle to overlying and underlying cradles.

The present disclosure relates to a cradle whereby considerable force is needed to undo the middle position stability of the inner structure.

The present disclosure relates to a cradle whereby at least one support interface or support element is provided both left and right of the respective tilting points for the tilted positions of the inner structure.

The present disclosure relates to a cradle whereby the support interfaces are straight or curved planes.

The present disclosure relates to a cradle whereby the tilting mechanism is executed as a W-shaped profiling, in which the two tilting points are located at the bottom of the two V-grooves and a horizontal support interface left and right of the W provides stable support in the tilted positions via a complementary form of the tilting and support elements of the inner structure.

The present disclosure relates to a cradle whereby the tilting mechanism is executed as a double reverse U profiling, in which the two tilting points are located in the U, and a horizontal support interface left and right of the tilting points provides stable support in the tilted positions via a complementary form of the tilting and support elements of the inner structure.

The present disclosure relates to a cradle whereby the tilting mechanism ensures that the initiated tilting movement is executed in a controlled way under the influence of gravity.

The present disclosure relates to a cradle whereby the cradle can be stably transported in the middle position.

The present disclosure relates to a cradle whereby the cradle is located in a stack of cradles which is collectively tiltable by the mechanical tilting of the upper and/or lower or any random engagement point, e.g. halfway the cradle, which in turn transmits the tilting movements to the other neighbouring cradles of the stack, whereby said cradles will then gradually continue tilting under the influence of gravity to a stable angle.

Mechanical tilting is by an active force after which gravity takes over the last part of the tilting.

The tilting mechanism is executed such that gravity ensures that the tiltable inner structure comes to be positioned at the right stable angle. To this end an active tilting movement needs to be transmitted initially, but from a certain angle the cradle continues tilting on its own under the influence of gravity to the correct angle.

Initiating a tilting movement can be executed in various ways. All methods to ensure that the correct tilting angle is reached under the influence of gravity fall under this application. The described way creates a stable situation until the cradle is mechanically forced to another side. The external mechanism to activate a tilting movement can be attached in a random location.

The mechanically driven tilting is to tilt the inner structure past the dead tilting point and to compensate all accumulated angle deviations. Gravity subsequently takes over the further tilting movement, supported by rollers and tilting cams.

Consequently a stable situation of stacked cradles in a certain tilted angle is created until the cradle is mechanically forced to another side. The mechanism to activate a tilting movement can be attached in a random location in relation to the stack and the cradles.

Mechanical tilting of the upper and/or lower cradle by an external force, which in turn transmits its tilting movement to the other cradles of the stack, is most practical. Said cradles will then gradually continue to tilt under the influence of gravity to a stable angle.

In another embodiment tilting all cradles primarily mechanically is a requirement.

The advantage of the tilting mechanism of the invention is that despite a limited play, the tilting movement is executed in a controlled way. The cradle shall thus not 'drop' in one go to the stable position but gradually go to the stable position in a controlled way thanks to the position of the overlying or underlying cradle, and this with the help of gravity.

Consequently, the play of every cradle no longer has any influence on realising a constant tilting angle. Because this play is relatively small, 'dropping' to the stable position is calmly executed as well. All the more because the tilting movement itself can be executed very calmly. No time pressure is involved in the tilting process.

Preferably, the required external force is not too big. An increasing force increases the risk that the upper cradle is disrupted or wrenched loose. Moreover, with an increasing force, wear and tear increases. Disruption is understood to mean that the forces become so great that components start to elastically and/or plastically deform which compromises the functionality. Moreover a relatively big force also requires a relatively heavy construction, in other words a relatively expensive construction.

Gravity is almost certainly a requirement to be able to guarantee a working construction at all.

An exclusively mechanical construction is not able to continue the tilting precisely and without wear and tear to the last cradle.

When the required force is relatively small, instability increases. However, the force should not become too great in order to reduce production costs, prevent elastic and plastic deformation and consequently also wear and tear.

The cams control the tilting speed, and prevent the uncontrolled acceleration of tilting as a result of gravity.

The tilting movement is initiated by an external mechanical force. Said force raises the centre of gravity to a maximum, the upper dead point, after which the centre of gravity drops again. From that moment, gravity can take over the tilting.

Theoretically, the force, gravity-induced, of overlying cradles in a stack could initiate the tilting of underlying cradles. However, in the embodiment, the external force must push all cradles beyond the dead point.

When said process occurs free of play, an introduced tilting of, for example, 20° suffices. However, say there is a play of 0.5° per cradle and there are 28 cradles, the total play angle is 28x0.5= 14°. The mechanical rotation must therefore be greater than 20+14 = 38°. Therefore the force must be based on the "external force" and not on gravity. If, for example, the play amounted to 1°, the total mechanical rotation should amount to 20+28 = 48° as a result of which the whole assembly would no longer function, as the cradle cannot be tilted more than 45°.

The present disclosure also relates to a stable position whereby the inner cradle is in the middle position (angle of 0°). During the transport to and from the cradlerooms to and from the various machines in the hatchery a stable transport of the cradles is required. If the tilting mechanism were to be executed as a central axis, the inner structure can rotate freely around said axis without the provision of a lock. Because the inner structure rests on at least two tilting points in the middle position, left and right of the rotation axis, the inner structure is stable. Corisiderable force is needed to undo said stability. In case of a small movement, e.g. a bump in the floor during transport with a transport medium, the cradle will remain in the stable middle position.

Due to the sagging of the cradles (heavy load in synthetic material cradles) the forces from one cam to the other can become serious. And thus the friction between said cams becomes great. Said friction can become (is) so great, that the inner structure comes to sit on its rollers, and not on its support cams or bolts, and is lifted out of the cams. This results in a blockage

This problem can be solved by reducing the friction. This can be realised in several ways, such as among others, by making the diameter of the cams smaller such that the contact is less long, by the choice of material, or by fixation whereby the cams are arranged rotatably for example.

To prevent the inner structures from being lifted out of their cams, the upper contour of the cams, in combination with the supporting structures or bolts, can form a lockup.

Only the inner structure of the upper or lower cradle is pushed against in a tilting movement by an actuator above or below the stack of cradles. All other inner structures are pushed against by the respective cradle above or below.

Due to deviations (small eggs), sagging of the inner structure and wear and tear, the lower inner structure does not exactly follow the upper inner structure. But as soon as the inner structure moves over its tilting point, it will continue moving under the influence of gravity to an end position of 45°.

The inner structure needs a couple of spare degrees to be sure that the cradle reaches the end position of 45°.

Tests have shown that a tilting angle of 30° is the best compromise. The result is a 15° reserve.

The tilting angle is a ratio of the inner structure design and is derived from the height of the centre of gravity above the two tilting legs.

The centre of gravity is derived from the total mass of the eggs, and the position of the eggs.

The height between the centre of gravity and the tilting legs, and the width between the tilting legs is a design choice. The higher, the broader the two tilting legs can be placed, and the more stability during transport. The broader, the more stable the inner structure stands, but the greater the tilting angle.

The inner structure moves sideways into the wall of the cradle during tilting. This depends on the tilting angle and the length of the tilting legs.

The upper edge of the inner structure comes against the wall of the cradle between 5 and 12° and starts to get stuck. This angle and distance are a result of the chosen tilting angle and the length of the tilting legs. This must be compensated by increasing (or adapting) the width of the wall of the cradle.

With the intention of better showing the characteristics of the invention, a preferred embodiment is described of a device according to the invention hereinafter, by way of an example without any limiting nature, with reference to the accompanying drawings wherein:
figure 1A-B schematically shows an embodiment of a cradle according to WO2019097439A1;
figure 2A-B shows a stack of two cradles according to figure 1;
figure 3 shows the operation of a tilting system according to the invention;
figure 4 shows a first embodiment of a cradle according to the invention;
figure 5 shows the tilting movement of a cradle according to figure 4;
figure 6 shows a second embodiment of a cradle according to the invention;
figure 7 shows the tilting movement of a cradle according to figure 6; and
figure 8A-C shows the stability of the support cams as a function of the inclination.

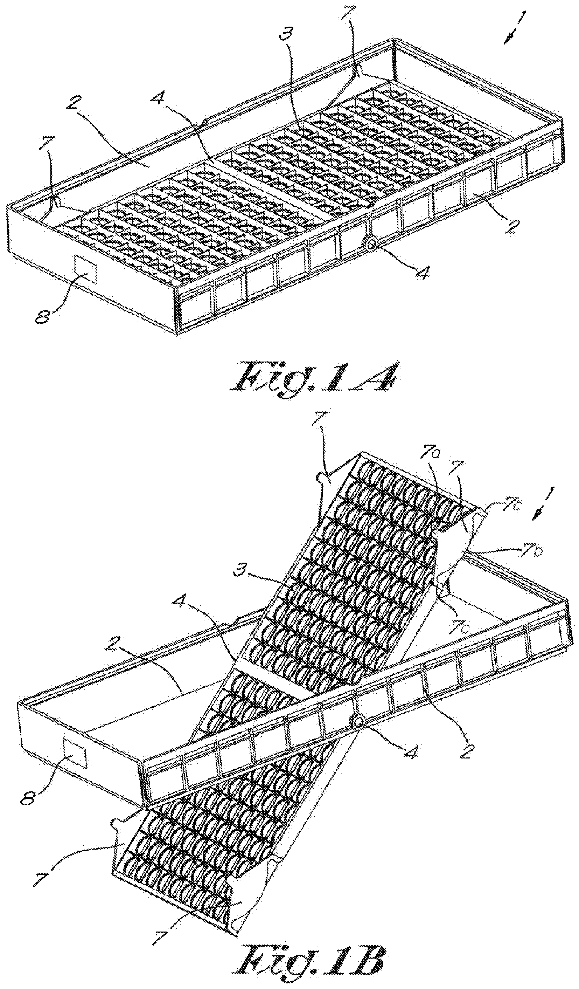

Figures 1A-B show a cradle 1 according to WO2019097439A1. The cradle 1 has a stackable cradle wall 2 and a tiltable inner structure 3. A number of positions are included in this inner structure 3 in which eggs can be placed. The inner structure 3 is tiltable in relation to the cradle wall 2 over a tilting axis or rotation axis via tilting points 4 attached in the cradle wall.

In figure 1A the inner structure 3 is in the middle position or not tilted. Figure 1B shows a cradle 1 with a tilted inner structure 3.

The inner structure 3 offers room to the eggs in a rectangular pitch ratio. This can also be a triangular pitch ratio.

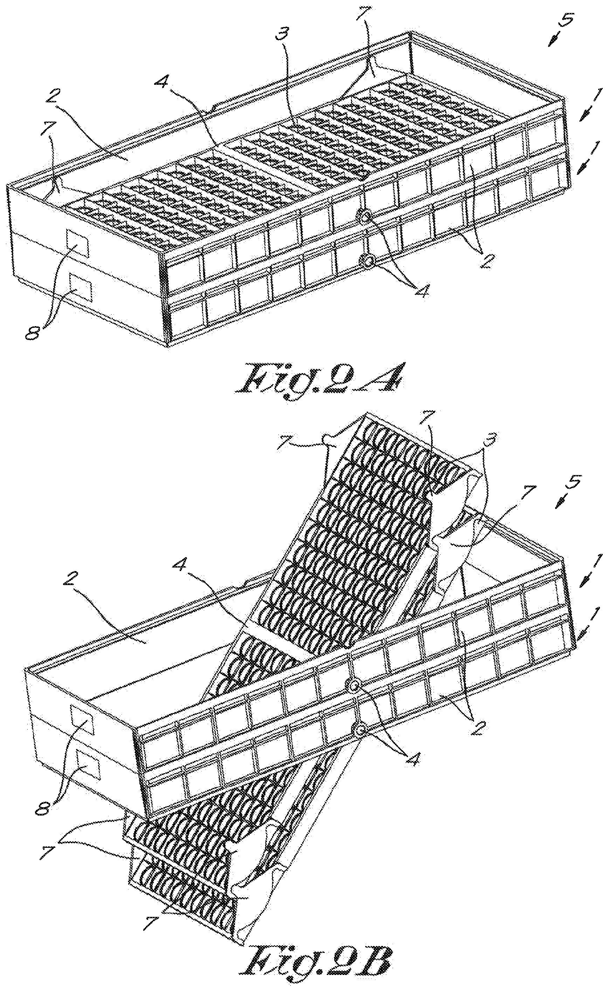

Figure 2 A-B shows two cradles 5 according to figure 1 which are stacked on top of each other via the cradle wall 2. The inner structure 3 of both cradles is tilted via the tilting points 4 and takes up minimum space. By tilting (the inner structure 3 of) one cradle, the stacked cradles automatically tilt along in the same direction.

The cradles 1 are tilted via tilting cams 7 which are attached to the four outer sides of the inner structure 3. Figure 2B shows the interaction between two cams. The cams continue the tilting movement across the cradles.

The tilting cams 7 of figures 1 and 2 have a special embodiment with a twofold function. On the one hand offer a support point 7a against which a second complementary form 7b can stably lean during the tilting movement. Consequently the tilting movement is also transmitted to an overlying or underlying cradle and the inner structures are kept at a distance from each other. On the other hand the cam also offers a lock 7c in the two stably tilted end positions of an inner structure. Said locking is desired as the inner structure tilts over a single tilting point which in itself does not provide any such locking.

No locking is provided in this embodiment for the stable untilted position of the inner structure. The tilting mechanism of the invention provides a solution for this.

The inner structure is provided with four tilting cams 7, whereby each cam 7 has an upwardly protruding part 7a and a curved underside 7b with two end projections 7c, whereby the cam is formed such that the upwardly protruding part 7a of a second cradle projects against the middle of the curved underside 7b of a first cradle in vertical position, and the curved underside 7b is formed such that the upwardly protruding parts 7a are guided during a tilting movement, whereby the end projections 7c of the first cradle are formed such that the upwardly protruding parts 7a are included in a stable tilted position.

The tilting can be done both in the left and right direction, preferably over a maximum of 45°.

In the stable untilted position of the inner structures, the upwardly protruding part 7a of the cam of a cradle projects against the middle of the curved underside 7b of the cam 7 of an overlying stacked cradle 1. The cams support the inner structures.

In a stable tilted position of the inner structures in one or the other direction, the upwardly protruding part 7a of the cam of a cradle is received in one of the end projections 7c of the cam 7 of an overlying stacked cradle 1.

When tilting the inner structures in the one or the other direction, the upwardly protruding part 7a of the cam of a cradle leans along the curved underside 7b of the cam of an overlying stacked cradle 1.

Consequently, the tilting movement is supported by the cams.

The inner structure 3 is tiltably arranged via two tilting walls 2 of the cradle and a fictitious tilting axis 4-4.

The inner structure is tiltable in both directions of +45° and - 45°.

Between the tiltable inner structure and the two tilting walls 2, a stable tilting system 9 is provided in the current invention.

The tilting system 9 comprises, at both ends of the fictitious tilting axis 4-4, a first element 10 attached to the tiltable inner structure 3, preferably to the outer contour, and a complementary second element 16 attached to the cradle wall 2, preferably to the inner contour. The second element 11 supports the first element 15.

The complementary form of the first and second element 10,11 provides interfaces and one or several stable support points in untilted position of the inner structure 3, as well as further support during the tilting movement and in a stable tilted end position in both directions left and right in relation to the tilting axis 4-4.

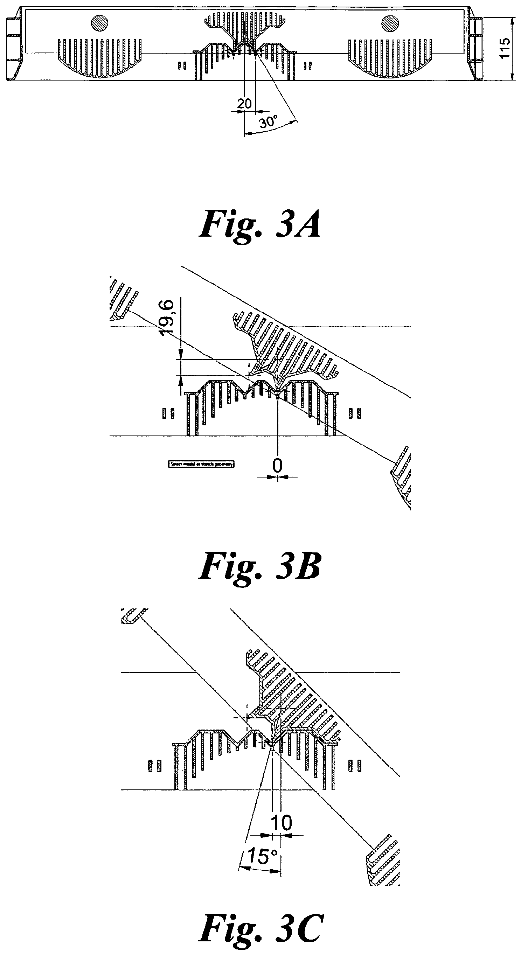

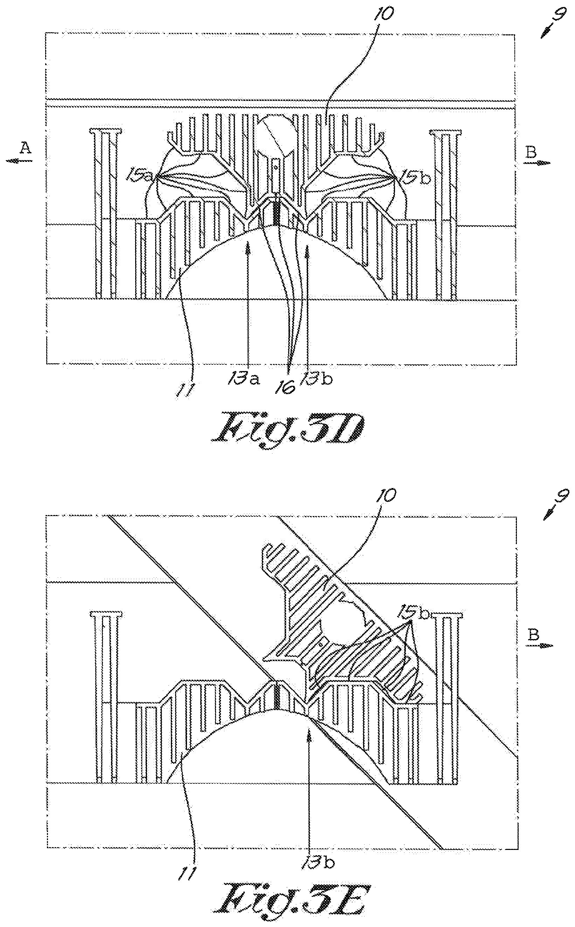

Figure 3 shows the operation of a tilting system with two tilting points or support legs (support cams).

In horizontal position of the inner structure (Figure 3A) the first element 10, i.e. the support cam which is provided at the tiltable inner structure 3, rests with two support points or legs on the second element 11, i.e. the support element that is provided at the wall 2 of the cradle.

The first and second element have complementary support points and interfaces in both the horizontal position of the inner structure and in both tilted positions.

The inner structure is executed with two support cams each at the end of a fictitious tilting axis. The support cams are applied to the outer contour of the inner structure such that the space for the eggs remains equally big and intact.

The support element is fittingly provided at the inner contour of the cradle wall.

The continued tilting of the tilting mechanism is via rollers and tilting cams, at each end per side where the support cams are located. Other embodiments are possible.

During a tilting movement, in the one or other direction, the first element (together with the inner structure) lifts over one support point, i.e. the relevant support point in the tilt direction.

The tilting movement is completed (when the inner structure is tilted 45°) when the first element rests stably on a relevant support interface. This is a stable end position. This can also be a support point, but a support interface is more stable.

While tilting, the centre of gravity of the cradle shifts upward to subsequently move downward to the stable end position.

To initiate a tilting movement, the inner structure is pushed downward or upward on one side.

While tilting, the centre of gravity shifts upward until the tilting angle is reached (dead point) whereby the centre of gravity is located above the tilting point.

During the further tilting movement of the inner structure, the centre of gravity shifts downward until the tilting angle is 45°.

In the example of the tilting system of figure 3A, the centre of gravity lies at 20 mm from both tilting points, at a height of 34.6 mm in relation to the tilting point. At a 30° tilting movement in one or the other direction, the tilting point is reached (Figure 3B). The tilting movement is initiated by an external force F.

Figure 3C shows the stable end position of a 45° tilting of the inner structure, whereby the first and the second element have three stable interfaces.

Figure 3D and 3E show a tilting device 9 for tilting from a stable untilted position to two stable untilted end positions, whereby the tilting device 9 comprises two tilting points 13a, 13b which allow a first tilting in a first direction A via the first tilting point 13a and a second tilting in a second direction B via the second tilting point 13b, whereby the first and second tilting point 13a,13b are instrumental for the stable untilted position of the tilting device (Figure 3D).

In the first direction A of the first tilting point 13a a number of first interfaces 15a are provided, and in the second direction B of the second tilting point 13b a number of second interfaces 15b. Said interfaces 15a,15b are instrumental for the stable tilted end positions of the tilting device after tilting in the relevant direction over the relevant tilting point.

Figure 3E shows a tilting in the direction B.

A third interface 16 is provided between the two tilting points 13a,13b, whereby the interface 16 is instrumental for the stable untilted position of the tilting device.

The tilting device has two cooperating tilting elements 10,11, a first tilting element 10 provided at the tiltable inner structure 3 and a second element 11 at the cradle wall 2. Said tilting elements 10,11 are provided with the two tilting points 13a,13b and the first and second interfaces 15a,15b.

The tilting device has a W shape i.e. two tilting points 13a,13b and a number of interfaces 15a,15b to support the stable end positions.

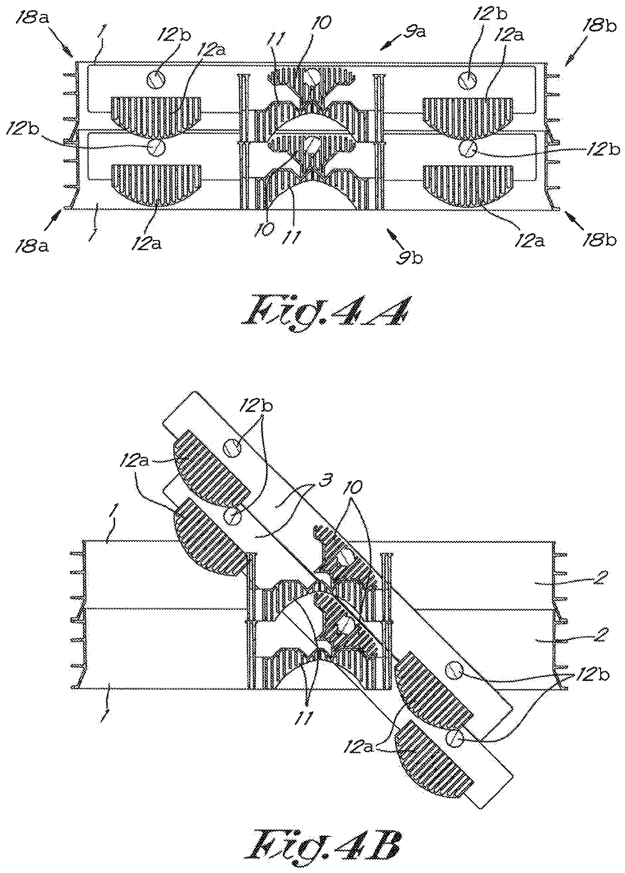

Figure 4A shows a preferred embodiment of a stack of two cradles in a horizontal position of the inner structure and figure 4B in a tilted position.

The tilting mechanism is executed as a double V-shaped profiling with connected neighbouring legs, and is provided with a horizontal extended profiling to every other leg.

The two tilting points are located at the bottom of the two V-grooves and a horizontal support interface left and right of the VV provides stable support in the tilted positions via a complementary form and further from the tilting and support elements of the inner structure.

The tiltable inner structure is provided with four cooperating rollers and tilting cams, and this left and right of both support cams of the inner structure.

In a stack of two cradles 1 in untilted position, the tilting cams 12a of an overlying cradle rest on the rollers 12b of an underlying cradle.

The form of the tilting cams 12a is such that the tilting movement is supported at all times during the tilting via an interface with the rollers 12b. And this both for a movement of 45° to the left or to the right.

Figure 4B shows the contact between a roller 12b of the underlying cradle and the tilting cam 12a of the overlying cradle in the tilted end position. In the horizontal (resting) position of figure 4A the tilting cam 12a finds support on a roller 12b.

The tilt supporting elements 18a,18b each comprise a tilting cam 12a and roller 12b, whereby the tilting cam 12a of a first tilting device 9a is supported by the roller 12b of a second tilting device 9b.

The support cams 10,12a,12b are provided at the tiltable inner structure and the supporting structure 11 is provided at the relevant walls of the cradle.

By tilting, the inner structure moves in the cradle wall.

Figure 4B shows a 45° tilted position of the inner structures of the stacked cradles. The tilting system has a stable tilted end position and rests on three interfaces.

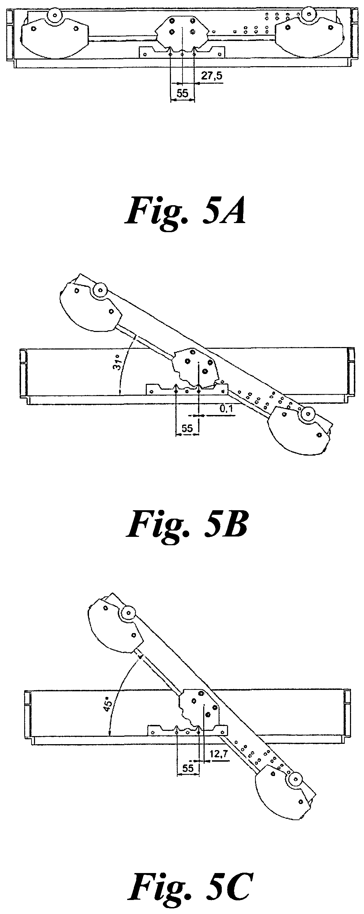

Figure 5 shows the tilting movement of a cradle with tilting system according to figure 4, from a horizontal position (Fig 5A), via an external force F up to the tilting angle of 31° (Figure 5B) and further under the influence of gravity to the supported end position of 45° (Figure 5C).

The tiltable inner structure is provided with support cams (as explained before), rollers and cams or tilting cams.

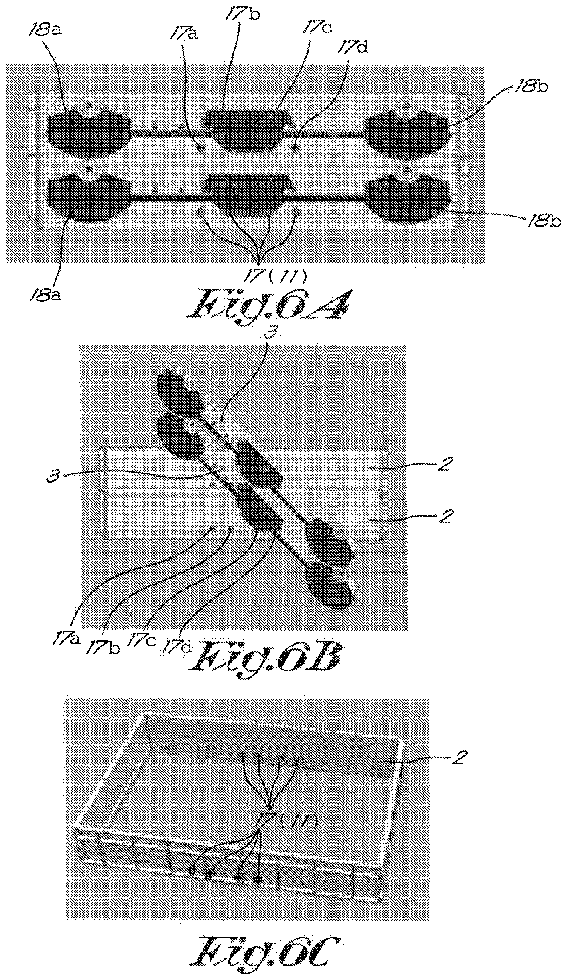

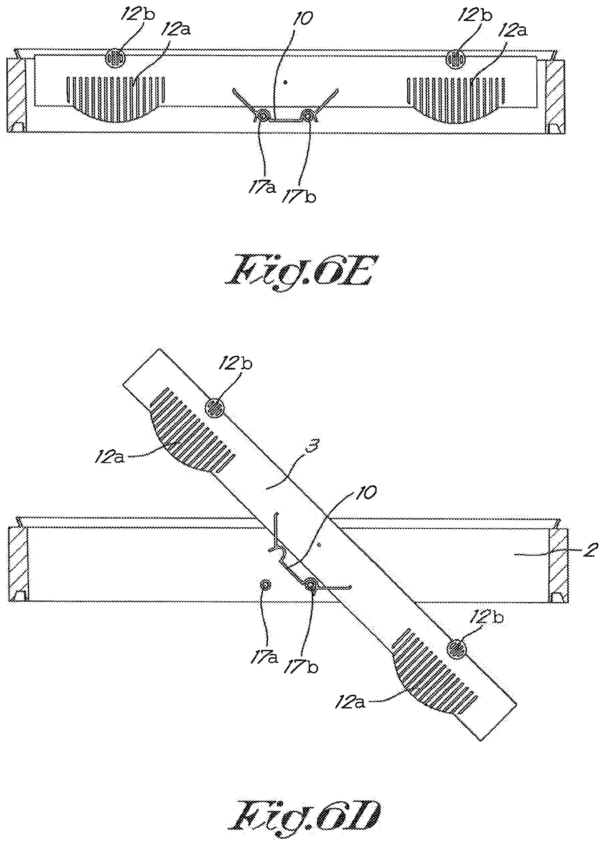

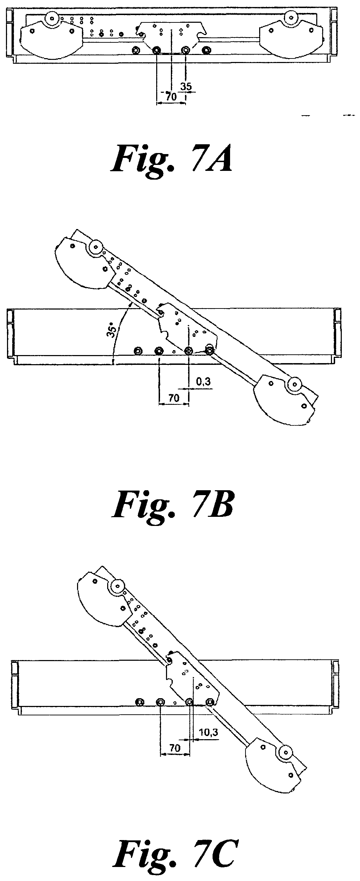

In a second embodiment according to figures 6 and 7, an example is shown, the walls of the stackable cradle of which are provided with bolts to support the tiltable inner structure. The operation is analogue to that of the first embodiment of figures 4 and 5.

Figure 6A shows a stable horizontal position of the inner structures of two stacked cradles; figure 6B shows a stable 45° end position. Figure 6C shows a cradle wall provided with four bolts: two central bolts for a stable horizontal position of figure 6A and two right and left bolts for a stable 45° end position of figure 6B.

The cams, or rollers and cams, transmit the tilting movement of the inner structure from one cradle to the other cradle.

The cams make the inner structure tilt from 0° to the tilting angle; the position where the centre of gravity is located above one of the two support points. Beyond this point, gravity makes the inner structure tilt further, until the inner structure touches the supports, at 45°, i.e. the end position.

The actuators which make the inner structure tilt, must move to approximately 42 to 43°, whereby the last few degrees are completed under the influence of gravity. Consequently, partly thanks to the system of tilting cams and rollers, a soft run up to the 45° end positions is obtained.

The support cams are formed by locking forms for the relevant bolts and the connection between said four locking forms, as also shown in figure 6D for the horizontal position of the inner structure and figure 6E for a tilted position. Figures 6E and 6F show an embodiment with only two bolts, i.e. two tilting points.

Figures 6A and 6B also show the rollers and support cams as described above relating to figures 4A and 4B.

Figure 7 shows the tilting movement of a cradle with tilting system according to figure 6, from a horizontal position (Fig 7A), via an external force F up to the tilting angle of 35° (Fig 7B) and further under the influence of gravity to the supported end position of 45° (Figure 7C).

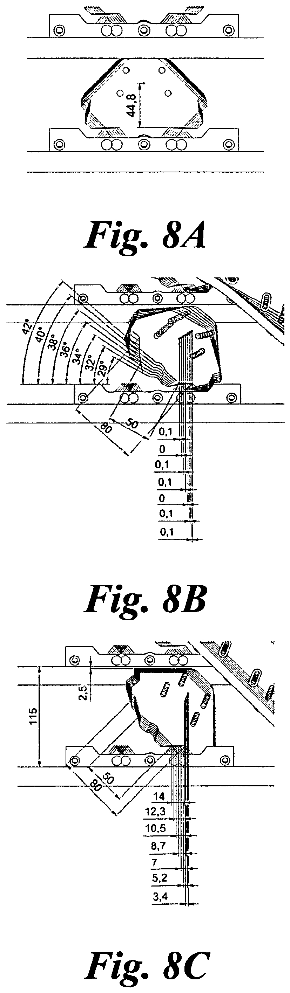

Figure 8A-C shows that the greater the inclination of the support cams (support legs or bolts), the further or more stable the centre of gravity is beyond the cam. Table 1 shows the distance from the centre of gravity to the support cam for a certain tilting angle and a certain pitch of the support cams.

**Table 1**

| Pitch | Tilt angle (degrees) | Distance (mm) |
|---|---|---|
| 50 | 29 | 14 |
| 55 | 32 | 12.3 |
| 60 | 34 | 10.5 |
| 65 | 3)6 | 8.7 |
| 70 | 38 | 7 |
| 75 | 40 | 5.2 |
| 80 | 42 | 3.4 |

## Claims

1. Cradle (1) for use in a process of hatching eggs, the cradle comprising a stackable cradle wall (2) and a tiltable inner structure (3) with a number of positions to receive eggs, whereby the inner structure (3) is tiltable under an angle, in a first and second direction (A,B), around a fictitious tilting axis (4-4), **characterised in that** on the level of the intersection of the fictitious tilting axis with the cradle (2) wall and the inner structure (3), a stable tilting device (9) is provided between the tiltable inner structure and the stackable cradle wall of a cradle, said tilting device (9) comprising two tilting points (13a,13b) on the cradle wall and corresponding tilting elements on the inner structure, whereby the inner structure rests, respectively supports, stably on the two tilting points (13a,13b or 17b,17c) in the middle position, and is tiltable in the first direction (A) or in the second direction (B) via the first tilting point (13a), respectively the second tilting point (13b).

2. Cradle according to claim 1, **characterised in that** the tilting device (9) comprises corresponding and complementary support elements (10,11) on the cradle wall and the inner structure.

3. Cradle according to claim 1 or 2, **characterised in that** the tilting device is dimensioned such that the tilting is started by an external active force and continued up to or just past the tilting angle, after which the tilting is continued under the influence of gravity.

4. Cradle according to any of the previous claims, **characterised in that** the inner structure (3) is symmetrically tiltable via two tilting points (13a,13b) symmetrically arranged in relation to the central tip of the tilting movement.

5. Cradle according to any of claims 2 to 4, **characterised in that** the tilting device (9) comprises a first support element (10) which is part of the tiltable inner structure (3) and a second support element (11) which is part of the cradle wall (2), whereby the first support element (10) is complementary to and cooperates with the second support element (11), whereby the first support element (10) is arranged to rest stably on the second support element (11), both in the middle position of the inner structure and in the tilted positions in the first (A) and the second (B) direction, and is stably tiltable over the two tilting points (13a,13b).

6. Cradle according to any of the previous claims, **characterised in that** the inner structure is tiltable over 45° in the first (A) and second (B) direction.

7. Cradle according to any of the previous claims, **characterised in that** the tilting device is provided with at least one first and at least one second tilt supporting element or tilting cam (18a,18b) which guide or support the tilting in respectively the first or second direction during the whole tilting movement, whereby the tilt supporting elements or tilting cams (18a,18b) are provided in or at the tiltable inner structure at or near the ends of the inner structure

8. Cradle (1) according to claim 7, **characterised in that** the tilt supporting elements (18a,18b) each comprise a tilting cam (12a,7b) and a roller (12b,7a), whereby the tilting cam (12a) of a first tilting device (9a) is supported by the roller (12b) of a second tilting device (9b) when the first cradle is stacked on the second cradle via the stackable cradle wall and the form of the tilting cams (12a) is such that the tilting movement is supported at all times during the tilting via an interface with the rollers (12b).

9. Cradle according to any of the previous claims, **characterised in that** a considerable force is needed to undo the middle position stability of the inner structure (3).

10. Cradle according to any of claims 2 to 9, **characterised in that** at least one support interface (15a, 15b) or support element (17a,17d) is provided in both first (A) and second (B) direction of the respective tilting points (13a,13b or 17b,17c) for the tilted positions of the inner structure (3).

11. Cradle according to claim 10, **characterised in that** the support interfaces (15a, 15b) are straight or curved planes.

12. Cradle according to claim 10 or 11, **characterised in that** the tilting device (9) is arranged as a W-shaped profiling, in which the two tilting points (13a,13b) are located at the bottom of the two V-grooves and a horizontal support interface (15a,15b) left and right of the W provides stable support in the tilted positions via a complementary shape of the tilting and support elements (10) of the inner structure (3).

13. Cradle according to claim 10 or 11, **characterised in that** the tilting device (9) is arranged as a double reverse U profiling, in which the two tilting points (13a,13b) are located in the U, and a horizontal support interface left and right of the tilting points (13a,13b) provides stable support in the tilted positions via a complementary shape of the tilting and support elements (10) of the inner structure (3).

14. Method for tilting the tilting device (9) of a cradle (1) according to any of the previous claims, **characterised in that** the tiltable inner structure (3) is positioned at the right stable angle by initially transmitting an active tilting movement , whereby from a certain angle the inner structure (3) continues tilting on its own under the influence of gravity to the correct angle.

15. Method according to claim 14, **characterised in that** the tilting movement is initiated by an external mechanical force.

16. Method according to claim 15, **characterised in that** the inner structures (3) of a stack (5) of cradles (1) is mechanically forced to another side by mechanical tilting of the inner structure (3) of the upper and/or lower cradle by an external force, which in turn transmits its tilting movement to the inner structure (3) of the other cradles (1) of the stack (5).

17. Method according to claim 16, **characterised in that** the external force pushes all inner structures (3) of the cradles (1) of the stack (5) beyond the dead point.

18. Method according to claim 14 to 17, **characterised in that** the tilting movement is supported by the cams (18a,18b), and the cams (18a,18b) control the tilting speed and prevent the uncontrolled acceleration of tilting as a result of gravity.

## Patentansprüche

1. Wiege (1) zur Verwendung bei einem Eierbrutverfahren, wobei die Wiege eine stapelbare Wiegenwand (2) und eine kippbare innere Struktur (3) umfasst, die eine Anzahl von Positionen zur Aufnahme von Eiern umfasst, wobei die innere Struktur (3) unter Bildung eines Winkels in einer ersten und einer zweiten Richtung (A, B) um eine fiktive Kippachse (4-4) gekippt werden kann, **dadurch gekennzeichnet, dass** an der Kreuzung der fiktiven Kippachse mit der Wiegenwand (2) und der inneren Struktur (3) eine stabile Kippvorrichtung (9) zwischen der kippbaren inneren Struktur und der stapelbaren Wiegenwand einer Wiege vorgesehen ist; wobei die oben genannte Kippvorrichtung (9) zwei Kipppunkte (13a, 13b) an der Wand der Wiege und entsprechende Kippteile an der inneren Struktur umfasst; wobei die innere Struktur stabil auf den beiden Kipppunkten (13a, 13b bzw. 17a, 17b) aufliegt bzw. die beiden genannten Punkte in der mittleren Position stabil trägt, und über den ersten Kipppunkt (13a) bzw. den zweiten Kipppunkt (13b) in die erste Richtung (A) oder in die zweite Richtung (B) kippen kann.

2. Wiege nach Anspruch 1, **dadurch gekennzeichnet, dass** die Kippvorrichtung (9) entsprechende und komplementäre Stützelemente (10, 11) an der Wand der Wiege und an der inneren Struktur umfasst.

3. Wiege nach Anspruch 1 oder 2, **dadurch gekennzeichnet, dass** die Kippvorrichtung derart ausgelegt ist, dass das Kippen durch eine äußere Kraft ausgelöst und bis zum Kippwinkel oder bis zu einer Stelle knapp über dem Kippwinkel fortgesetzt wird; danach wird das Kippen durch die Schwerkraft fortgesetzt.

4. Wiege nach einem der vorstehenden Ansprüche, **dadurch gekennzeichnet, dass** die innere Struktur (3) über zwei Kipppunkte (13a, 13b), die symmetrisch zum mittleren Ende der Kippbewegung angebracht sind, symmetrisch gekippt werden kann.

5. Wiege nach einem der Ansprüche 2 bis 4, **dadurch gekennzeichnet, dass** die Kippvorrichtung (9) ein erstes Stützelement (10), das Teil der kippbaren Innenstruktur (3) ist, und ein zweites Stützelement (11), das Teil der Wand (2) der Wiege ist, umfasst; wobei das erste Stützelement (10) komplementär zum zweiten Stützelement (11) ist und mit diesem zusammenwirkt; wobei das erste Stützelement (10) derart angebracht ist, dass es stabil auf dem zweiten Stützelement (11) aufliegt, sowohl in der mittleren Position der inneren Struktur als auch in den in der ersten Richtung (A) und der zweiten Richtung (B) gekippten Positionen, und dass es über die beiden Kipppunkte (13a, 13b) stabil kippen kann.

6. Wiege nach einem der vorstehenden Ansprüche, **dadurch gekennzeichnet, dass** die innere Struktur unter einem Winkel von 45° in der ersten Richtung (A) und der zweiten Richtung (B) kippbar ist.

7. Wiege nach einem der vorstehenden Ansprüche, **dadurch gekennzeichnet, dass** die Kippvorrichtung mit zumindest einem ersten und zumindest einem zweiten Kippstützelement oder zumindest einem ersten und zumindest einem zweiten Kippnocken (18a, 18b) ausgestattet ist, die das Kippen während der gesamten Kippbewegung in die erste bzw. zweite Richtung führen oder stützen; wobei die Kippstützelemente oder Kippnocken (18a, 18b) in der kippbaren inneren Struktur oder an der inneren Struktur an den Enden der inneren Struktur oder in deren Nähe vorgesehen sind.

8. Wiege (1) nach Anspruch 7, **dadurch gekennzeichnet, dass** die Kippstützelemente (18a, 18b) jeweils einen Kippnocken (12a, 7b) und eine Rolle (12b, 7a) umfassen; wobei der Kippnocken (12a) einer ersten Kippvorrichtung (9a) von der Rolle (12b) einer zweiten Kippvorrichtung (9b) gestützt wird, wenn die erste Wiege über die stapelbare Wiegenwand auf die zweite Wiege gestapelt wird, und die Kippnocken (12a) eine derartige Form aufweisen, dass die Kippbewegung jederzeit während des Kippens über eine Schnittstelle mit den Rollen gestützt wird. (12b)

9. Wiege nach einem der vorstehenden Ansprüche, **dadurch gekennzeichnet, dass** eine beträchtliche Kraft aufgewendet werden muss, um die Stabilität der mittleren Position der inneren Struktur (3) aufzuheben.

10. Wiege nach einem der Ansprüche 2 bis 9, **dadurch gekennzeichnet, dass** zumindest eine Stützschnittstelle (15a, 15b) oder zumindest ein Stützelement (17a, 17d) sowohl in der ersten Richtung (A) als auch in der zweiten Richtung (B) der jeweiligen Kipppunkte (13a, 13b oder 17a, 17b) für die gekippten Positionen der inneren Struktur (3) vorgesehen ist.

11. Wiege nach Anspruch 10, **dadurch gekennzeichnet, dass** die Stützschnittstelle (15a, 15b) gerade oder gekrümmte Ebenen sind.

12. Wiege nach Anspruch 10 oder 11, **dadurch gekennzeichnet, dass** die Kippvorrichtung (9) in Form eines Profils ausgebildet ist, das eine W-förmige Form aufweist, wobei die beiden Kipppunkte (13a, 13b) an der Basis der beiden V-förmigen Nuten angebracht sind, und eine horizontale Stützschnittstelle (15a, 15b) links und rechts des W durch eine komplementäre Form der Kipp- und Stützelemente (10) der inneren Struktur (3) eine stabile Abstützung in den gekippten Stellungen bereitstellt.

13. Wiege nach Anspruch 10 oder 11, **dadurch gekennzeichnet, dass** die Kippvorrichtung (9) in Form eines Profils ausgebildet ist, das eine doppelte, umgekehrte U-förmige Form aufweist, wobei die beiden Kipppunkte (13a, 13b) in dem U angebracht sind, und eine horizontale Stützschnittstelle links und rechts der Kipppunkte (13a, 13b) durch eine komplementäre Form der Kipp- und Stützelemente (10) der inneren Struktur (3) eine stabile Abstützung in den gekippten Stellungen bereitstellt.

14. Verfahren zum Kippen der Kippvorrichtung (9) einer Wiege (1) nach einem der vorstehenden Ansprüche, **dadurch gekennzeichnet, dass** die kippbare innere Struktur (3) durch eine anfängliche Übertragung einer aktiven Kippbewegung in den richtigen stabilen Winkel gebracht wird; wobei die innere Struktur (3) das Kippen ab einem bestimmten Winkel von selbst unter dem Einfluss der Schwerkraft fortsetzt.

15. Verfahren nach Anspruch 14, **dadurch gekennzeichnet, dass** die Kippbewegung durch eine äußere mechanische Kraft ausgelöst wird.

16. Verfahren nach Anspruch 15, **dadurch gekennzeichnet, dass** die inneren Strukturen (3) eines Stapels (5) von Wiegen (1) zwangsweise mechanisch auf eine andere Seite mittels einer mechanischen Kippbewegung der inneren Struktur (3) der oberen und/oder unteren Wiege durch eine äußere Kraft versetzt werden, die wiederum ihre Kippbewegung auf die innere Struktur (3) der anderen Wiegen (1) des Stapels (5) überträgt.

17. Verfahren nach Anspruch 16, **dadurch gekennzeichnet, dass** die äußere Kraft alle inneren Strukturen (3) der Wiegen (1) des Stapels (5) über den Totpunkt hinaus drückt.

18. Verfahren nach den Ansprüchen 14 bis 17, **dadurch gekennzeichnet, dass** die Kippbewegung durch die Nocken (18a, 18b) gestützt wird und die Nocken (18a, 18b) die Kippgeschwindigkeit regulieren und eine unkontrollierte Beschleunigung oder ein unkontrolliertes Kippen aufgrund der Schwerkraft verhindern.

## Revendications

1. Berceau (1) pour son utilisation dans un processus d'éclosion d'œufs ; dans lequel le berceau comprend une paroi de berceau (2) apte à s'empiler et une structure interne apte à basculer (3) qui comprend un certain nombre de positions pour la réception des œufs ; dans lequel la structure interne (3) est apte à basculer en formant un angle, dans une première et une deuxième direction (A, B), autour d'un axe de basculement fictif (4-4), **caractérisé en ce que**, au niveau de l'intersection de l'axe de basculement fictif avec la paroi du berceau (2) et la structure interne (3), on prévoit un dispositif de basculement stable (9) entre la structure interne apte à basculer et la paroi de berceau apte à s'empiler d'un berceau; dans lequel ledit dispositif de basculement (9) comprend deux points de basculement (13a, 13b) sur la paroi du berceau et des éléments de basculement correspondants sur la structure interne ; dans lequel la structure interne s'appuie, respectivement supporte, de manière stable sur les deux points de basculement (13a, 13b ou 17a, 17b), dans la position médiane, et peut basculer dans la première direction (A) ou dans la deuxième direction (B) par l'intermédiaire du premier point de basculement (13a), respectivement du deuxième point de basculement (13b).

2. Berceau selon la revendication 1, **caractérisé en ce que** le dispositif de basculement (9) comprend des éléments de support correspondants et complémentaires (10, 11) sur la paroi du berceau et sur la structure interne.

3. Berceau selon la revendication 1 ou 2, **caractérisé en ce que** le dispositif de basculement est dimensionné d'une manière telle que le basculement est déclenché par l'intermédiaire d'une force active externe et se poursuit ainsi jusqu'à l'angle de basculement ou jusqu'à un endroit situé juste au-delà de l'angle en question ; après quoi le basculement se poursuit sous l'effet de la pesanteur.

4. Berceau selon l'une quelconque des revendications précédentes, **caractérisé en ce que** la structure interne (3) est apte à basculer de manière symétrique par l'intermédiaire de deux points de basculement (13a, 13b) qui sont disposés dans une position symétrique par rapport à l'extrémité centrale du mouvement de basculement.

5. Berceau selon l'une quelconque des revendications 2 à 4, **caractérisé en ce que** le dispositif de basculement (9) comprend un premier élément de support (10) qui fait partie de la structure interne apte à basculer (3) et un deuxième élément de support (11) qui fait partie de la paroi (2) du berceau ; dans lequel le premier élément de support (10) est complémentaire au deuxième élément de support (11) et coopère avec lui ; dans lequel le premier élément de support (10) est disposé d'une manière telle qu'il s'appuie de façon stable sur le deuxième élément de support (11), aussi bien dans la position médiane de la structure interne que dans les positions à l'état basculé dans la première direction (A) et la deuxième direction (B), et qu'il peut basculer de manière stable par-dessus les deux points de basculement (13a, 13b).

6. Berceau selon l'une quelconque des revendications précédentes, **caractérisé en ce que** la structure interne est apte à basculer en formant un angle de 45° dans la première direction (A) et la deuxième direction (B).

7. Berceau selon l'une quelconque des revendications précédentes, **caractérisé en ce que** le dispositif de basculement est équipé au moins d'un premier et au moins d'un deuxième élément de support de basculement ou au moins d'une première et au moins d'une deuxième came de basculement (18a, 18b) qui guident ou supportent le basculement dans respectivement la première ou la deuxième direction au cours du mouvement de basculement dans son ensemble ; dans lequel les éléments de support de basculement ou les cames de basculement (18a, 18b) sont prévus dans la structure interne apte à basculer ou contre cette dernière aux extrémités de la structure interne ou à proximité des extrémités de cette dernière.

8. Berceau (1) selon la revendication 7, **caractérisé en ce que** les éléments de support du basculement (18a, 18b) comprennent chacun une came de basculement (12a, 7b) et un galet (12b, 7a) ; dans lequel la came de basculement (12a) d'un premier dispositif de basculement (9a) est supportée par le galet (12b) d'un deuxième dispositif de basculement (9b) lorsque le premier berceau est empilé sur le deuxième berceau par l'intermédiaire de la paroi de berceau apte à s'empiler et les cames de basculement (12a) possèdent une forme telle que le mouvement de basculement est supporté à tout moment au cours du basculement par le biais d'une interface avec les galets (12b).

9. Berceau selon l'une quelconque des revendications précédentes, **caractérisé en ce qu'**une force considérable doit être déployée pour anéantir la stabilité de la position médiane de la structure interne (3).

10. Berceau selon l'une quelconque des revendications 2 à 9, **caractérisé en ce que** l'on prévoit au moins une interface de support (15a, 15b) ou au moins un élément de support (17a, 17d) à la fois dans la première direction (A) et dans la deuxième direction (B) des points de basculement respectifs (13a, 13b ou 17a, 17b) pour les positions à l'état basculé de la structure interne (3).

11. Berceau selon la revendication 10, **caractérisé en ce que** les interfaces de support (15a, 15b) sont des plans droits ou courbes.

12. Berceau selon la revendication 10 ou 11, **caractérisé en ce que** le dispositif de basculement (9) est conçu à la manière d'un profilé possédant une configuration en forme de W, dans lequel les deux points de basculement (13a, 13b) sont situés à la base des deux rainures en forme de V, et une interface de support horizontale (15a, 15b) à gauche et à droite du W procure un support stable dans les positions à l'état basculé par le biais d'une configuration de forme complémentaire des éléments de basculement et de support (10) de la structure interne (3).

13. Berceau selon la revendication 10 ou 11, **caractérisé en ce que** le dispositif de basculement (9) est conçu à la manière d'un profilé possédant une configuration en forme d'un double U inversé, dans lequel les deux points de basculement (13a, 13b) sont situés dans le U, et une interface de support horizontale à gauche et à droite des points de basculement (13a, 13b) procure un support stable dans les positions à l'état basculé par le biais d'une configuration de forme complémentaire des éléments de basculement et de support (10) de la structure interne (3).

14. Procédé destiné au basculement du dispositif de basculement (9) d'un berceau (1) selon l'une quelconque des revendications précédentes, **caractérisé en ce que** la structure interne apte à basculer (3) est mise dans une position dans laquelle elle forme l'angle correct stable, dans un premier temps, par l'intermédiaire d'une transmission d'un mouvement de basculement actif ; dans lequel, à partir d'un certain angle, la structure interne (3) poursuit son basculement par elle-même sous l'influence de la pesanteur jusqu'à ce qu'elle atteigne l'angle correct.

15. Procédé selon la revendication 14, **caractérisé en ce que** le mouvement de basculement est déclenché par une force mécanique externe.

16. Procédé selon la revendication 15, **caractérisé en ce que** les structures internes (3) d'une pile (5) de berceaux (1) sont déplacées de manière forcée par voie mécanique vers un autre côté par l'intermédiaire d'un basculement mécanique de la structure interne (3) du berceau supérieur et/ou inférieur par le biais d'une force externe qui transmets, à son tour son mouvement de basculement à la structure interne (3) des autres berceaux (1) de la pile (5).

17. Procédé selon la revendication 16, **caractérisé en ce que** la force externe pousse toutes les structures internes (3) des berceaux (1) de la pile (5) au-delà du point mort.

18. Procédé selon les revendications 14 à 17, **caractérisé en ce que** le mouvement de basculement est supporté par les cames (18a, 18b) et les cames (18a, 18b) règlent la vitesse de basculement et empêchent une accélération ou un basculement incontrôlé en raison de la pesanteur.
